# EUROPÄISCHE PATENTSCHRIFT

(11) **EP 1 186 878 B1**
(45) Veröffentlichungstag und Bekanntmachung des Hinweises auf die Patenterteilung: **15.10.2003**
(21) Anmeldenummer: 01119290.3
(22) Anmeldetag: 10.08.2001
(51) Int. Cl.: G01N 1/28

(54) **Verfahren und Vorrichtung zur Laser-Mikrodissektion**
Method and Device for Laser Microdissection
Procédé et dispositif de microdissection Laser

(30) Priorität: 01.09.2000 DE 10043504
(43) Veröffentlichungstag der Anmeldung: 13.03.2002
(73) Patentinhaber: Leica Microsystems Wetzlar GmbH, 35578 Wetzlar (DE)
(72) Erfinder: Ganser, Michael, Dr., 35398 Giessen (DE)
(74) Vertreter: Reichert, Werner F., Dr.

(56) Entgegenhaltungen:
- US-A- 5 998 129
- SCHUETZE K ET AL: "LASER MICROMANIPULATION SYSTEMS AS UNIVERSAL TOOLS IN CELLULAR AND MOLECULAR BIOLOGY AND IN MEDICINE" CELLULAR AND MOLECULAR BIOLOGY, CMB ASSOCIATIONS, NOISY-LE-GRAND, FR, Bd. 44, Nr. 5, Juni 1998 (1998-06), Seiten 735-746, XP001007402 ISSN: 0145-5680
- ISENBERG G ET AL: "CELL SURGERY BY LASER MICRO-DISSECTION: A PREPARATIVE METHOD" JOURNAL OF MICROSCOPY, OXFORD, GB, Bd. 107, Nr. 1, 1. Mai 1976 (1976-05-01), Seiten 19-24, XP000671562 ISSN: 0022-2720
- BOEHM M ET AL: "Microbeam-MOMeNT: Non-Contact Laser Microdissection of Membrane-Mounted Native Tissue" AMERICAN JOURNAL OF PATHOLOGY, PHILADELPHIA, PA, US, Bd. 151, Nr. 1, 1. Juli 1997 (1997-07-01), Seiten 63-67, XP002169793 ISSN: 0002-9440

## Beschreibung

Die Erfindung betrifft ein Verfahren und eine Vorrichtung zur Laser-Mikrodissektion interessierender Probenbereiche einer Probe, die auf einem Probenhalter aufgebracht ist.

Mit Laser-Mikrodissektion wird im Bereich der Biologie und der Medizin ein Verfahren bezeichnet, mit dem aus einer im allgemeinen flachen Probe (beispielsweise Zellen oder ein Gewebeschnitt) ein kleines Stück mit einem feinen, fokussierten Laserstrahl ausgeschnitten wird. Das ausgeschnittene Stück steht damit für weitere biologische oder medizinische (z.B. histologische) Untersuchungen zur Verfügung.

Die US 5,998,129 beschreibt ein solches Verfahren und eine Vorrichtung zur Laser-Mikrodissektion. Die Probe ist auf einem festen, planen Träger angeordnet, beispielsweise einer polymeren Trägerfolie, die über einen laborüblichen Objektträger aus Glas gespannt ist. Das beschriebene Verfahren arbeitet in zwei Schritten. In einem ersten Schritt wird mit einem Laserstrahl ein interessierender Probenbereich der Probe, auf dem sich z.B. ein selektierter Zellverband oder ein histologischer Schnitt befindet, mit einem Laserstrahl ausgeschnitten. Die Schnittlinie des Laserstrahls beschreibt dazu eine geschlossene Kurve um den interessierenden Probenbereich. Nach dem Schnitt liegt bzw. haftet der ausgeschnittene, interessierende Probenbereich dann noch auf seinem Untergrund. Daher wird in einem zweiten Schritt ein zusätzlicher Laserschuss auf den interessierenden Probenbereich gerichtet und dadurch der interessierende Probenbereich in Richtung des Laserstrahls in ein Auffanggefäß geschleudert.

Ein Nachteil des Verfahrens tritt beim ersten Verfahrensschritt auf. Kurz bevor die Schnittlinie geschlossen ist, ist der ausgeschnittene, interessierende Probenbereich nur noch mit einem schmalen Steg mit der umgebenden Probe verbunden. Bedingt durch elektrische Aufladung oder durch mechanische Spannung im Steg, klappt in diesem Stadium des Schnitts der bisher ausgeschnittene, interessierende Probenbereich häufig weg, d.h. aus der Fokusebene des Laserstrahls heraus oder hinter die verbleibende Trägerfolie. Eine Fertigstellung des Schnitts des weggeklappten interessierenden Probenbereichs ist nicht möglich, da der umgeklappte Teil des Probenbereichs in die Schnittlinie ragt und damit beim weiteren Schneiden beschädigt wird. Zugleich ist ein Weitertransport des ausgeschnittenen Probenbereichs mittels Laserschuss damit erschwert oder sogar unmöglich, da keine ausreichende Angriffsfläche für den Laserschuss vorhanden ist.

Es ist daher Aufgabe der Erfindung, ein Verfahren zur Laser-Mikrodissektion anzugeben, welches eine gezielte Trennung eines interessierenden Probenbereichs aus einer Probe erlaubt und ein Wegklappen des interessierenden Probenbereichs verhindert.

Diese Aufgabe wird gelöst durch ein Verfahren zur Laser-Mikrodissektion interessierender Probenbereiche einer Probe, die auf einem Probenhalter aufgebracht ist, welches erfindungsgemäß folgende Schritte aufweist:
a) Erstellen einer Perforation mit Stegen entlang einer den interessierenden Probenbereich umschließenden Schnittlinie mittels eines Laserstrahls, wobei die Perforation mindestens zwei, die Schnittlinie unterbrechende Stege aufweist, welche den interessierenden Probenbereich mit der umgebenden Probe verbinden,
b) und Abreißen der Stege der Perforation mit einem einzigen, auf den interessierenden Probenbereich gerichteten Laserimpuls, wodurch der interessierende Probenbereich von der Probe getrennt wird.

Es ist eine weitere Aufgabe der Erfindung, eine Vorrichtung zur Ausübung des Verfahrens zur Laser-Mikrodissektion anzugeben, welches eine gezielte Trennung eines interessierenden Probenbereichs aus einer Probe erlaubt und ein Wegklappen des interessierenden Probenbereichs verhindert.

Diese Aufgabe wird gelöst durch eine Vorrichtung zum Laserschneiden mikroskopischer Proben, die ein Mikroskop mit mindestens einem eine optische Achse definierenden Objektiv aufweist, das zur Betrachtung einer Probe mit einem interessierenden Probenbereich dient, die außerdem einen Laser aufweist, der einen Laserstrahl erzeugt, und mindestens ein optisches System, das den Laserstrahl in das Objektiv einkoppelt, und die erfindungsgemäß folgende Merkmale aufweist:
a) eine Schnittlinien-Steuerungseinheit, die dem Mikroskop zur Erzeugung einer Relativbewegung zwischen dem Laserstrahl und der Probe zugeordnet ist,
b) Mittel zum Erstellen einer Perforation mit Stegen entlang einer den interessierenden Probenbereich umschließenden Schnittlinie mittels eines Laserstrahls, wobei die Perforation mindestens zwei, die Schnittlinie unterbrechende Stege aufweist, welche den interessierenden Probenbereich mit der umgebenden Probe verbinden,
c) und Mittel zum Abreißen der Stege der Perforation mit einem einzigen, auf den interessierenden Probenbereich gerichteten Laserimpuls, wodurch der interessierende Probenbereich von der Probe getrennt wird.

Für das erfindungsgemäße Verfahren werden die zu untersuchenden Proben, aus denen interessierende Probenbereiche ausgeschnitten werden sollen, auf sehr dünne Kunststoff-Filme präpariert. Die Dicke dieser Kunststoff-Filme liegt in der Größenordnung zwischen 1 bis 2 µm. Es können beispielsweise PET-Filme verwendet werden. Die besten Schnittergebnisse wurden jedoch mit PEN-Filmen erzielt. Damit ist es möglich, schmale und zugleich stabile Stege zu erzeugen. Es hat sich als besonders günstig für das Verfahren erwiesen, wenn Stege mit einer Breite von ungefähr 1 µm stehen gelassen werden. Die Kunststoff-Filme sind in bekannter Weise über einen Probenhalter gespannt. Dies kann z.B. ein laborüblicher Objektträger aus Glas sein. Andere Probenhalter (Form, Material) sind jedoch denkbar. Der Probenhalter liegt auf einem xy-Tisch auf, der es erlaubt, unterschiedliche Probenbereiche zu betrachten und auszuwählen. Die Vorrichtung weist üblicherweise mindestens ein Behältnis zum Auffangen eines ausgeschnittenen, interessierenden Probenbereichs in der Nähe der Probe auf.

Eine Ausführungsform der erfindungsgemäßen Vorrichtung weist einen feststehenden Laserstrahl auf, und die Schnittlinien-Steuerungseinheit umfasst einen verfahrbaren xy-Tisch, welcher beim Erstellen einer Perforation die Probe relativ zu dem feststehenden Laserstrahl bewegt. Dabei werden sehr hohe Anforderungen an die Positioniergenauigkeit des xy-Tisches gestellt, um eine exakte Schnittlinie zu erzeugen. Der xy-Tisch wird vorzugsweise motorisch verfahren.

In einer anderen Ausführungsform der erfindungsgemäßen Vorrichtung umfasst die Schnittlinien-Steuerungseinheit eine Laser-Scan-Einrichtung, welche beim Erstellen einer Perforation den Laserstrahl relativ zu einer feststehenden Probe bewegt. Dazu wird beim Erstellen der Perforation der xy-Tisch mit dem aufliegenden Probenhalter und der Probe nicht verfahren. Die Schnittlinie der Perforation entsteht ausschließlich durch Ablenken des Laserstrahls über die Probe.

Besonders vorteilhaft ist eine Ausführungsform der Vorrichtung, in welcher die Mittel zum Erstellen einer Perforation eine Laser-Steuerungseinheit umfassen, welche die Betriebsparameter des Lasers steuert. Diese Betriebsparameter sind beispielsweise die Laser-Leistung, die Laser-Pulsdauer oder die Laser-Schnittbreite. Zusätzlich können die Mittel zum Erstellen einer Perforation eine Autofokusvorrichtung für den Laser umfassen. Dadurch ist eine Automatisierung des Perforationsvorgangs möglich.

Weiterhin können die Mittel zum Abreißen der Stege der Perforation eine Perforation-Steuerungseinheit zur Steuerung der Schnittlinien-Steuerungseinheit und der Laser-Steuerungseinheit umfassen. Dazu erweist es sich als günstig, wenn die Perforation-Steuerungseinheit zusätzlich Mittel zum Defokussieren des Lasers umfasst. Dann braucht ein Benutzer der Vorrichtung zum Abreißen der Stege den Laser nicht mehr manuell defokussieren. Dieses Defokussieren stellt einen wesentlichen Teil des Verfahrens dar, weil dadurch der Laserstrahl aufgeweitet und seine Energie auf eine größere Fläche verteilt wird. Dadurch wird in dem interessierenden Probenbereich kein Schnitt mehr erzeugt, sondern der Laserimpuls zum Abreißen der Stege genutzt.

Anschließend kann mittels der Autofokusvorrichtung für die Laser-Mikrodissektion eines anderen interessierenden Probenbereichs sehr schnell und zuverlässig eine Fokussierung des Lasers vorgenommen werden. Dadurch ist eine Automatisierung des gesamten Verfahrens möglich.

In anderen Ausführungsformen der Vorrichtung sind Mittel zur Auswahl der Schnittlinie oder Mittel zur Auswahl der Schnittlinie und der Lage der Stege durch einen Benutzer vorgesehen. Zusätzlich können Mittel zur Auswahl der Breite der Stege und zur Auswahl der Lage der Stege durch einen Benutzer vorgesehen sein. Durch diese Auswahlmöglichkeit kann der Benutzer vor dem Erstellen der Perforation den richtigen interessierenden Probenbereich gezielt auswählen und zugleich wichtige Stellen der Probe vor Beschädigungen schützen. So entstehen beispielsweise im Bereich der Stege Riss-Strukturen zwischen dem interessierenden Probenbereich und der umgebenden Probe. Indem der Benutzer beispielsweise die Stege auf unkritische Zellstrukturen der Probe legen kann, werden kritische, interessierende Zellstrukturen innerhalb des interessierenden Probenbereichs vor solchen Riss-Strukturen geschützt.

Das erfindungsgemäße Verfahren besitzt den Vorteil, dass ein Wegklappen des interessierenden Probenbereichs beim Schneiden ausgeschlossen ist. Dadurch ist ein problemloses Schneiden der Probe möglich. Außerdem ist eine zuverlässige Entnahme des ausgeschnittenen, interessierenden Probenbereichs möglich. Eine Automatisierung des Verfahrens und der Vorrichtung ermöglicht einen Einsatz im routinemäßigen Laborbetrieb.

Die Erfindung wird nachfolgend anhand der schematischen Zeichnung genauer beschrieben. Es zeigen:
- ***Fig. 1***:: eine Vorrichtung zum Laserschneiden mit einem feststehenden Laserstrahl;
- ***Fig. 2***:: eine Probe mit einer Perforation um einen interessierenden Probenbereich;
- ***Fig. 3***:: eine Vorrichtung zum Laserschneiden mit einem beweglichen Laserstrahl.

In den Figuren sind gleiche Vorrichtungselemente mit denselben Bezugsziffern bezeichnet.

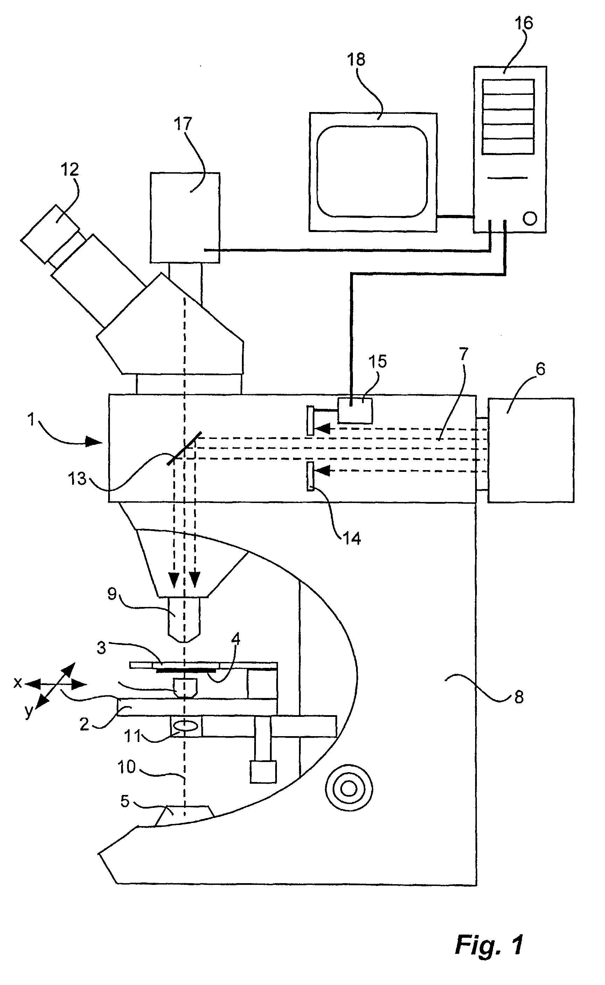

In ***Fig. 1*** ist eine Vorrichtung zum Laserschneiden dargestellt, welche mit einem feststehenden Laserstrahl und einer relativ dazu bewegten Probe arbeitet. Sie weist ein Mikroskop 1 mit einem motorisch verfahrbaren xy-Tisch 2 auf. Der xy-Tisch 2 dient zur Aufnahme eines Probenhalters 3, auf dem eine zu untersuchende bzw. zu schneidende Probe 4 ist aufgebracht ist. Ferner ist ein Beleuchtungssystem 5 sowie ein Laser 6 vorgesehen, der einen Laserstrahl 7 erzeugt, der zum Schneiden der Probe 4 auf diese fokussiert wird. Der xy-Tisch 2 dient als Schnittlinien-Steuerungseinheit und erzeugt während des Schneidvorgangs eine Relativbewegung zwischen dem Laserstrahl 7 und der Probe 4.

Bei dem dargestellten Mikroskop 1 handelt es sich um ein Durchlicht-Mikroskop, bei dem das Beleuchtungssystem 5 an einem Mikroskopstativ 8 unterhalb des xy-Tisches 2 und der Probe 4 angeordnet ist. Mindestens ein Objektiv 9 des Mikroskops 1 ist oberhalb des xy-Tisches 2 und der Probe 4 angeordnet. Das Objektiv 9 definiert eine optische Achse 10, die mit der optischen Achse des Beleuchtungssystems 5 fluchtet.

In dieser beschriebenen Anordnung wird die Probe 4 mit einer Durchlicht-Beleuchtung betrachtet. Das Laserschneiden könnte ebenso auch mit einem inversen Mikroskop ausgeführt werden, bei dem das Beleuchtungssystem 5 oberhalb des xy-Tisches 2 und das mindestens eine Objektiv 9 unterhalb des xy-Tisches 2 angeordnet ist.

Das von dem Beleuchtungssystem 5 ausgestrahlte Licht wird durch einen Kondensor 11 von unten auf den auf dem xy-Tisch 2 angeordneten Probenhalter 3 mit der Probe 4 gerichtet. Das die Probe 4 durchdringende Licht gelangt zum Objektiv 9 des Mikroskops 1. Innerhalb des Mikroskops 1 wird das Licht über nicht dargestellte Linsen und Spiegel mindestens einem Okular 12 des Mikroskops 1 zugeleitet, durch welches ein Bediener die auf dem xy-Tisch 2 angeordnete Probe 4 betrachten kann.

Im Mikroskopstativ 8 des Mikroskops 1 ist ein optisches System 13 in der optischen Achse 10 des Objektivs 9 vorgesehen. Das optische System 13 kann z.B. ein dichromatischer Teiler sein. Ferner ist es denkbar, dass das optische System 13 aus mehreren optischen Bauteilen besteht. Dies ist dann der Fall, wenn der Laserstrahl 7 mehrfach umgelenkt werden muss. Ferner ist im Laserstrahl 7 eine Blende 14 vorgesehen, mit welcher der Durchmesser des Laserstrahls 7 in entsprechender Weise beschränkt werden kann. Die Blende 14 kann z.B. als eine Festblende ausgebildet sein. In einer vorteilhaften Ausführungsform können mehrere Festblenden 14 auf einer Revolverscheibe oder einem Linearschieber angeordnet sein, um eine dieser Festblenden als die jeweils erforderliche Blende 14 in den Strahlengang einzubringen. Das Einbringen in den Laserstrahl 7 kann manuell durch den Benutzer oder motorisch durchgeführt werden.

In der hier dargestellten Ausführungsform ist die Blende 14 als eine Varioblende, beispielsweise als eine Irisblende, ausgebildet, deren Durchmesser über einen Blenden-Motor 15 gesteuert wird. Der Blenden-Motor 15 erhält von einem Rechner 16 die nötigen Steuersignale zum Einstellen des erforderlichen Blendendurchmessers.

Das Mikroskop 1 ist ferner mit einer Kamera 17 versehen, die ein Bild von der zu schneidenden Probe 4 aufnimmt. Dieses Bild ist auf einem Monitor 18 darstellbar, der mit dem Rechner 16 verbunden ist. Das System aus Rechner 16, Kamera 17 und Monitor 18 stellen in dieser Ausführungsform Mittel zum Erstellen einer Perforation dar. Sie können dazu verwendet werden, um den mit dem Laser 4 durchgeführten Schneidevorgang zu beobachten und zu überwachen. So kann der Rechner an den Laser Triggersignale zur Auslösung von Laserimpulsen und zur Steuerung der Laserleistung abgeben, den Blenden-Motor 15 ansteuern und eine (nicht dargestellte) Autofokuseinrichtung für den Laser 6 ansteuern.

Ferner kann auf dem Monitor 18 der auszuschneidende, interessierende Probenbereich der Probe 12 mittels eines Mauszeigers umfahren werden. Die Lage der Stege kann durch eine Software im Rechner 16 automatisch bestimmt werden. Es erweist sich jedoch als vorteilhaft, wenn ein Benutzer auch die Lage und Breite der Stege mittels Mausclick vorbestimmen kann. So können die Stege in Bereiche gelegt werden, in denen beim nachfolgenden Abreißen Risse auftreten dürfen, ohne die Information über den interessierenden Probenbereich zu beeinträchtigen. Entlang der so gekennzeichneten Schnittlinie wird dann der Schneidevorgang mittels des Laser 4 ausgeführt und die gewünschte Perforation erstellt. Es erweist sich als vorteilhaft, wenn die Breite des Laserstrahls 7 während der Erstellung der Perforation konstant ist.

Als Mittel zum Abreißen der Stege ist in dieser Ausführungsform eine in den Rechner 16 integrierte Steuerung zum automatischen De-Fokussieren des Lasers 6 vorgesehen. Zusätzlich kann durch eine Software im Rechner 16 aus der vorgewählten Schnittlinie die Mitte des interessierenden Probenbereichs bestimmt werden. Dann kann der xy-Tisch 2 so verfahren werden, dass der feststehende, defokussierte Laserstrahl 7 beim Abreißen der Stege auf diesen berechneten Mittelpunkt gerichtet ist.

Unterhalb der Probe 4 ist mindestens ein Auffangbehältnis 19 zum Auffangen des ausgeschnittenen, interessierenden Probenbereichs angeordnet.

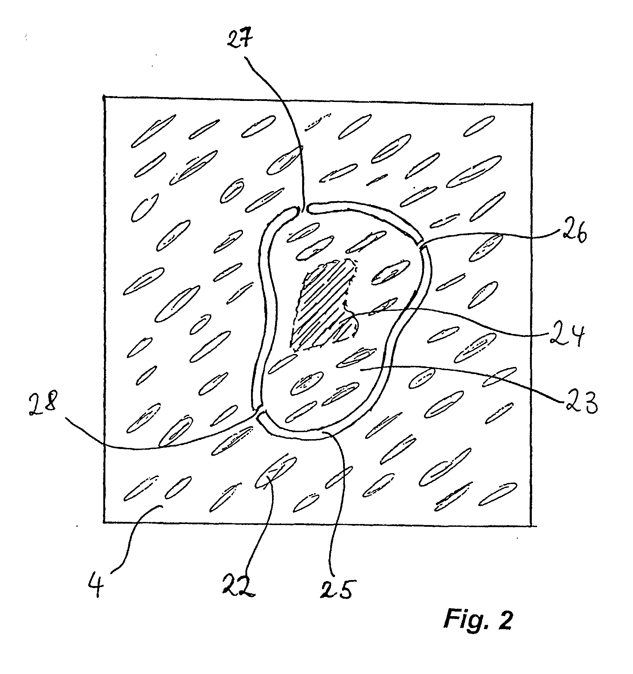

Anhand ***Fig. 2*** wird nachfolgend das erfindungsgemäße Verfahren beschrieben.

Dargestellt ist ein Kamerabild einer Probe 4 mit einer Vielzahl von Zellen 22. Ungefähr in der Mitte der Probe 4 liegt eine interessierender Probenbereich 23, in dem eine abweichende Zellstruktur 24, z.B. eine mutmaßliche Krebszelle, liegt. Dieser interessierende Probenbereich 23 soll für weitere Untersuchungen aus der Probe 4 entnommen werden.

Dazu wird von einem Benutzer unter Benutzung einer entsprechenden Software mittels einer Computermaus im Kamerabild eine gewünschte Soll-Schnittlinie für die zu erzeugenden Perforation markiert. Außerdem wird die Anzahl und gewünschte Lage der Stege der Perforation markiert.

Entsprechend der aktuellen eingestellten Schnittbreite des Laserstrahls 7 wird mit dem Rechner 16 zu der definierten Soll-Schnittlinie eine Anzahl von Sollpositionen des Laserstrahls auf der Probe 4 berechnet, wobei die aneinander gereihten Sollpositionen des Laserstrahls 7 die gewünschte Soll-Schnittlinie ergeben.

Zum Erzeugen der Perforation wird dann der Tisch schrittweise so verfahren, dass der Laserstrahl 7 nacheinander an den berechneten Sollposition auf die Probe 4 auftrifft. In jeder Sollposition wird von dem Rechner 16 jeweils ein Triggersignal erzeugt, an den Laser 6 gesendet und von diesem entsprechend ein Laserimpuls abgestrahlt. Auf diese Weise wird mit dem Laser 6 um den interessierenden Probenbereich 23 die dargestellte Perforation erzeugt. Die Perforation besteht aus der durch Stege 26, 27, 28 unterbrochenen Schnittlinie 25. Der interessierende Probenbereich ist dann nur noch durch die drei Stege 26, 27, 28 mit der umgebenden Probe 4 verbunden.

Im letzten Verfahrensschritt werden diese Stege 26, 27, 28 mit einem auf die Mitte des interessierenden Probenbereichs 23 gerichteten Laserimpuls abgerissen. Der auf diese Weise dissektierte, interessierende Probenbereich 23 fällt in ein darunter angeordnetes Auffanggefäß (nicht dargestellt) herab. Der Laserimpuls zum Abreißen der Stege 26, 27, 28 wird vorzugsweise mit einem deutlich defokussiertem Laserstrahl 7 durchgeführt, um in dem interessierenden Probenbereich möglichst biologische Veränderungen zu vermeiden. Insbesondere wird durch den aufgeweiteten Laserstrahl eine Perforation in dem interessierenden Probenbereich ausgeschlossen.

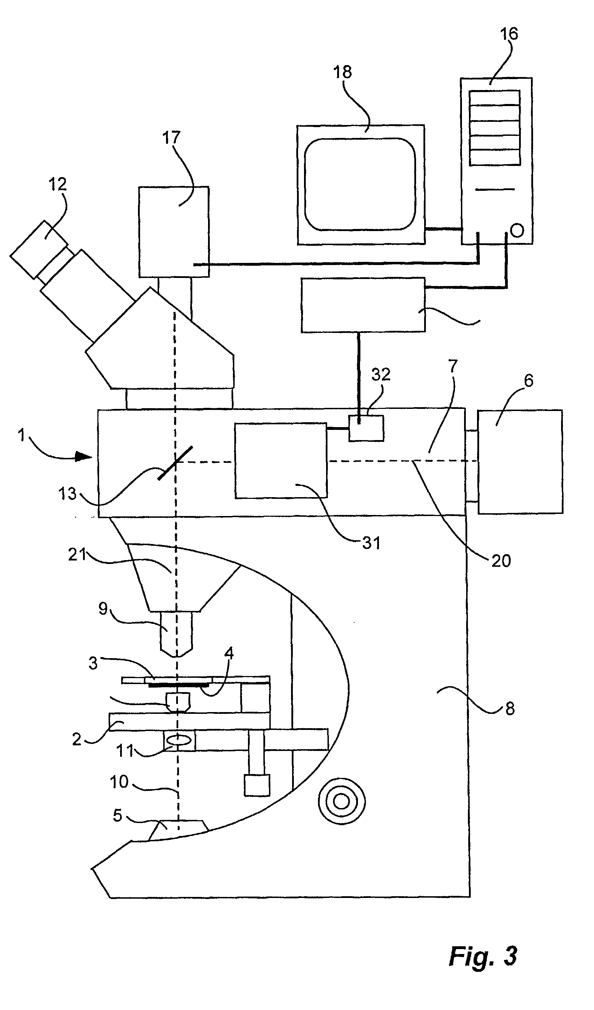

***Fig. 3*** zeigt ein erfindungsgemäßes Laser-Mikro-Dissektionsgerät zur Durchführung des erfindungsgemäßen Verfahrens, welches beim Schneiden einen Laserstrahl über eine festgehaltene Probe bewegt.

Das Laser-Mikro-Dissektionsgerät umfasst ein Mikroskop 1 mit einem verfahrbaren xy-Tisch 2, auf dem ein Probenhalter 3 angeordnet ist. An der Unterseite des Probenhalters 3 befindet sich eine zu schneidende Probe 4. Unter dem xy-Tisch 2 sind ein Beleuchtungssystem 5 und ein Kondensor 11 angeordnet, der die Probe 4 beleuchtet. Der xy-Tisch 2 wird während des Schneidvorgangs horizontal, also in x-Richtung und in y-Richtung, nicht verfahren. Unterhalb der Probe 4 ist mindestens ein Auffangbehältnis 19 zum Auffangen des ausgeschnittenen, interessierenden Probenbereichs angeordnet.

Von einem Laser 6, in diesem Beispiel ein UV-Laser, geht ein Laserstrahl 7 aus, der in einen Beleuchtungsstrahlengang 20 eingekoppelt wird. In dem Beleuchtungsstrahlengang 20 ist eine Laser-Scan-Einrichtung 31 angeordnet. Der Laserstrahl 7 durchläuft die Laser-Scan-Einrichtung 31 und gelangt über ein optisches System 13 zu einem Objektiv 9, das den Laserstrahl 7 auf die Probe 4 fokussiert. Das optische System 13 ist mit Vorteil als dichromatischer Teiler ausgeführt, durch den ein von der Probe 4 durch das Objektiv 9 ausgehender Abbildungsstrahlengang 21 zu mindestens einem Okular 12 gelangt.

Die Einstellung der Laser-Scan-Einrichtung 31 und damit die Verstellung des Laserstrahls 7 auf der Probe 4 erfolgt in dieser Ausführungsform mit Mitteln zum Erstellen einer Perforation, die einen der Laser-Scan-Einrichtung 31 zugeordneten Motor 32, eine Steuerungseinheit 33 und einen Rechner 16 umfassen. Der Motor 32 ist mit der Steuerungseinheit 33 verbundenen, welche die Steuersignale zur Ansteuerung des Motors 32 liefert. Die Steuerungseinheit 33 ist mit dem Rechner 16 verbunden, an den ein Monitor 18 angeschlossen ist.

Die Laser-Scan-Einrichtung 31 selbst dient als Schnittlinien-Steuerungseinheit, die während des Schneidvorgangs eine Relativbewegung zwischen dem Laserstrahl 7 und der Probe 4 erzeugt. Die Fokussierung des Laserstrahls 7 kann durch manuelles Verfahren des xy-Tisches 2 in der Höhe bei gleichzeitiger visueller Kontrolle des Kamerabildes durch einen Benutzer erfolgen. Bedienungsfreundlicher ist jedoch eine Ausführungsform der Vorrichtung, die eine Autofokus-Vorrichtung (nicht dargestellt) für den Laserstrahl 7 umfasst.

Durch Ansteuerung der Laser-Scan-Einrichtung 31 erscheint der Laserstrahl 7 am Ausgang der Laser-Scan-Einrichtung 31 unter verschiedenen Ablenkwinkeln. Dabei kann der Laserstrahl 7 durch Variation des Ablenkwinkels auf beliebige Positionen auf der Probe 4 geführt werden, die innerhalb des Sehfeldes des Objektivs 10 liegen. Durch geeignete Ansteuerung der Laser-Scan-Einrichtung 31 wird auf der Probe 4 eine Schnittlinie erzeugt. Der ausgeschnittene Teil der Probe 4 fällt in ein Auffanggefäß 17, das unterhalb der Probe 4 auf dem xy-Tisch 2 angeordnet ist.

Auf dem Monitor 18 wird das von einer Kamera 17 aufgenommene Bild der Probe 4 dargestellt. Als Vorbereitung zum Heraustrennen eines interessierenden Probenbereichs kann auf dem Monitor 18 mittels einer Rechner-Maus (nicht dargestellt) oder einer anderen beliebigen Cursorsteuerungseinrichtung eine Schnittlinie definiert werden. Der Rechner 16 ist außerdem mit der Laserlichtquelle 6 verbunden und liefert nur dann diesem Triggersignale zum Auslösen von Laserpulsen, wenn ein Schnitt durchgeführt wird.

Die Schnittbreite eines Lasers in einer Probe hängt ab von den Laserparametern, wie z.B. Laserleistung und Apertur des Laserstrahls 7. Diese Schnittbreite wird vorher bestimmt oder ist in Abhängigkeit von den Laserparametern in einer Tabelle im Rechner 16 abgelegt. Entsprechend der aktuellen eingestellten Schnittbreite wird zu der definierten Soll-Schnittlinie eine Anzahl von Sollpositionen des Laserstrahls auf der Probe 4 berechnet, wobei die aneinander gereihten Sollpositionen des Laserstrahls 7 die gewünschte Soll-Schnittlinie ergeben.

Dann werden auf der Probe 4 nacheinander die Sollpositionen mit der Laser-Scan-Einrichtung 31 angefahren. Jedesmal, wenn die Sollposition des Laserstrahls 7 auf der Probe 4 mittels der Laser-Scan-Einrichtung 31 vorbereitet bzw. eingestellt wurde, liefert der Rechner 16 Triggersignale zum Auslösen von Laserpulsen an die Laserlichtquelle 6. Auf diese Weise wird schrittweise die Schnittlinie erzeugt.

In einem zweiten Verfahrensschritt werden die Stege mit einem einzigen Laserimpuls abgerissen. Als Mittel zum Abreißen der Stege ist in dieser Ausführungsform eine in den Rechner integrierte Steuerung zum automatischen De-Fokussieren des Lasers 6 vorgesehen. Zusätzlich kann durch eine Software im Rechner 16 aus der vorgewählten Schnittlinie der Schwerpunkt des interessierenden Probenbereichs bestimmt werden. Dann kann der xy-Tisch 2 so verfahren werden, dass der feststehende, defokussierte Laserstrahl 7 beim Abreißen der Stege auf diesen berechneten Schwerpunkt gerichtet ist.

Die vorliegende Erfindung ist in Bezug auf Ausführungsbeispiele beschrieben worden. Es ist jedoch für jeden auf diesem Fachgebiet tätigen Fachmann offensichtlich, dass Änderungen und Abwandlungen vorgenommen werden können, ohne dabei den Schutzbereich der nachstehenden Ansprüche zu verlassen.

### Bezugszeichenliste

- 1.: Mikroskop
- 2.: verfahrbarer xy-Tisch
- 3.: Probenhalter
- 4.: Probe
- 5.: Beleuchtungssystem
- 6.: Laser
- 7.: Laserstrahl
- 8.: Mikroskopstativ
- 9.: Objektiv
- 10.: optische Achse
- 11.: Kondensor
- 12.: Okular
- 13.: optisches System
- 14.: Blende
- 15.: Blenden-Motor
- 16.: Rechner
- 17.: Kamera
- 18.: Monitor
- 19.: Auffangbehältnis
- 20.: Beleuchtungsstrahlengang
- 21.: Abildungsstrahlengang
- 22.: Zellen
- 23.: interessierender Probenbereich
- 24.: abweichende Zellstruktur
- 25.: Schnittlinie
- 26.: Steg
- 27.: Steg
- 28.: Steg
- 31.: Laser-Scan-Einrichtung
- 32.: Motor für Laser-Scan-Einrichtung
- 33.: Steuerungseinheit

## Patentansprüche

1. Verfahren zur Laser-Mikrodissektion interessierender Probenbereiche (23) einer Probe (4), die auf einem Probenhalter (3) aufgebracht ist, **gekennzeichnet durch** folgende Schritte:
a) Erstellen einer Perforation mit Stegen (26, 27, 28) entlang einer den interessierenden Probenbereich (23) umschließenden, **durch** Stege (26, 27, 28) unterbrochenen Schnittlinie (25) mittels eines Laserstrahls (7) , wobei die Perforation mindestens zwei, die Schnittlinie (25) unterbrechende Stege (26, 27, 28) aufweist, welche den interessierenden Probenbereich (23) mit der umgebenden Probe (4) verbinden,
b) und Abreißen der Stege (26, 27, 28) der Perforation mit einem einzigen, auf den interessierenden Probenbereich (23) gerichteten defokussierten Laserimpuls, wodurch der interessierende Probenbereich (23) von der Probe (4) getrennt wird.

2. Verfahren nach Anspruch 1, **dadurch gekennzeichnet,**
**dass** vor dem Erstellen der Perforation die Lage der Stege (26, 27, 28) durch einen Benutzer definiert wird.

3. Verfahren nach Anspruch 1, **dadurch gekennzeichnet,**
**dass** vor dem Erstellen der Perforation die Breite der Stege (26, 27, 28) durch einen Benutzer definiert wird.

4. Vorrichtung zur Durchführung des Verfahrens nach Anspruch 1, umfassend ein Mikroskop (1) mit mindestens einem eine optische Achse (10) definierenden Objektiv (9) zur Betrachtung einer Probe (4) mit einem interessierenden Probenbereich (23), und einen Laser (6), der einen Laserstrahl (7) erzeugt, und mindestens ein optisches System (13), das den Laserstrahl (7) in das Objektiv (9) einkoppelt,
**dadurch gekennzeichnet**,
a) dass dem Mikroskop (1) eine Schnittlinien-Steuerungseinheit (2; 31) zur Erzeugung einer Relativbewegung zwischen dem Laserstrahl (7) und der Probe (4) zugeordnet ist,
b) Mittel zum Erstellen einer Perforation (16, 17, 18; 16, 17, 18, 31, 32) mit Stegen (26, 27, 28) entlang einer den interessierenden Probenbereich (23) umschließenden, von den Stegen (26, 27, 28) unterbrochenen Schnittlinie mittels eines Laserstrahls (7) , wobei die Perforation mindestens zwei Stege (26, 27, 28) aufweist, welche den interessierenden Probenbereich (23) mit der umgebenden Probe (4) verbinden,
c) und dass Mittel zum Abreißen der Stege der Perforation vorgesehen sind, mit welchen der interessierende Probenbereich (23) mit einem einzigen, auf den interessierenden Probenbereich (23) gerichteten Laserimpuls von der Probe (4) getrennt wird.

5. Vorrichtung nach Anspruch 4, **dadurch gekennzeichnet, dass**
der Laserstrahl (7) feststehend ist und die Schnittlinien-Steuerungseinheit einen verfahrbaren xy-Tisch (2) umfasst, welcher beim Erstellen einer Perforation die Probe (4) relativ zu dem feststehenden Laserstrahl (7) bewegt.

6. Vorrichtung nach Anspruch 4, **dadurch gekennzeichnet,**
**dass** die Schnittlinien-Steuerungseinheit eine Laser-Scan-Einrichtung (31) umfasst, welche beim Erstellen einer Perforation den Laserstrahl (7) relativ zu einer feststehenden Probe (4) bewegt.

7. Vorrichtung nach Anspruch 4, **dadurch gekennzeichnet,**
**dass** die Mittel zum Erstellen einer Perforation eine Laser-Steuerungseinheit umfassen, welche die Betriebsparameter des Lasers (6) steuert.

8. Vorrichtung nach Anspruch 4, **dadurch gekennzeichnet,**
**dass** die Mittel zum Erstellen einer Perforation eine Autofokusvorrichtung für den Laser (6) umfassen.

9. Vorrichtung nach Anspruch 4, **dadurch gekennzeichnet,**
**dass** die Mittel zum Abreißen der Stege (26, 27, 28) der Perforation eine Perforation-Steuerungseinheit zur Steuerung der Schnittlinien-Steuerungseinheit (2; 31) und der Laser-Steuerungseinheit umfassen.

10. Vorrichtung nach Anspruch 4, **dadurch gekennzeichnet,**
**dass** die Perforation-Steuerungseinheit Mittel zum Defokussieren des Lasers (6) umfasst.

## Claims

1. Method for laser microdissection of regions (23) of interest of a sample (4) which is mounted on a sample holder (3), **characterized by** the following steps:
a) creating by means of a laser beam (7) a perforation having webs (26, 27, 28) along a cutting line (25) which encloses the sample region (23) of interest and is interrupted by webs (26, 27, 28), the perforation having at least two webs (26, 27, 28) which interrupt the cutting line (25) and connect the sample region (23) of interest to the surrounding sample (4),
b) and tearing off the webs (26, 27, 28) along the perforation with the aid of a single defocused laser pulse, directed onto the sample region (23) of interest, the sample region (23) of interest being separated from the sample (4).

2. Method according to Claim 1, **characterized in that** before the perforation is made the position of the webs (26, 27, 28) is defined by a user.

3. Method according to Claim 1, **characterized in that** before the perforation is made the width of the webs (26, 27, 28) is defined by a user.

4. Apparatus for carrying out the method according to Claim 1, comprising a microscope (1) having at least one objective (9) which defines an optical axis (10), for viewing a sample (4) having a region (23) of interest, and comprising a laser (6) which produces a laser beam (7), and comprising at least one optical system (13) which launches a laser beam (7) into the objective (9), **characterized**
a) in that the microscope (1) is assigned a cutting line control unit (2; 31) for generating a relative movement between the laser beam (7) and the sample (4),
b) in that means are provided for creating by means of a laser beam (7) a perforation (16, 17, 18; 16, 17, 18, 31, 32) having webs (26, 27, 28) along a cutting line (25) which encloses the sample region (23) of interest and is interrupted by webs (26, 27, 28), the perforation having at least two webs (26, 27, 28) which connect the sample region (23) of interest to the surrounding sample (4),
c) and in that means are provided for tearing off the webs of the perforation, with the aid of which the sample region (23) of interest is separated from the sample (4) by means of a single laser pulse directed onto the sample region (23) of interest.

5. Apparatus according to Claim 4, **characterized in that** the laser beam (7) is stationary and the cutting line control unit comprises a movable xy table (2) which moves the sample (4) relative to the stationary laser beam (7) when a perforation is being made.

6. Apparatus according to Claim 4, **characterized in that** the cutting line control unit comprises a laser scanning device (3) which moves the laser beam (7) relative to a stationary sample (4) when a perforation is being made.

7. Apparatus according to Claim 4, **characterized in that** the means for making a perforation comprise a laser control unit which controls the operating value of the laser (6).

8. Apparatus according to Claim 4, **characterized in that** the means for making a perforation comprise an autofocus unit for the laser (6).

9. Apparatus according to Claim 4, **characterized in that** the means for tearing off the webs (26, 27, 28) of the perforation comprise a perforation control unit for controlling the cutting line control unit (2; 31) and the laser control unit.

10. Apparatus according to Claim 4, **characterized in that** the perforation control unit comprises means for defocusing the laser (6).

## Revendications

1. Procédé de microdissection laser de régions intéressantes (23) d'un échantillon (4), posé sur un support d'échantillon (3), **caractérisé par** les étapes suivantes :
a) réaliser une perforation avec des languettes (26, 27, 28) en suivant une ligne de coupe (25) entourant la région intéressante (23) de l'échantillon interrompue par des languettes (26, 27, 28), à l'aide d'un rayon laser (7), la perforation présentant au moins deux languettes (26, 27, 28) interrompant la ligne de coupe (25) et réunissant la région intéressante (23) de l'échantillon avec l'échantillon (4) environnant
b) et arracher les languettes (26, 27, 28) de la perforation avec une seule impulsion laser défocalisée dirigée sur la région intéressante (23) de l'échantillon, ce qui a pour effet de séparer la région intéressante (23) de l'échantillon et ce dernier (4).

2. Procédé selon la revendication 1, **caractérisé en ce qu'**avant la perforation, la position des languettes (26, 27, 28) est définie par un utilisateur.

3. Procédé selon la revendication 1, **caractérisé en ce qu'**avant la perforation, la largeur des languettes (26, 27, 28) est définie par un utilisateur.

4. Dispositif pour mise en oeuvre du procédé selon la revendication 1, qui présente un microscope (1) avec au moins un objectif (9) définissant un axe optique (10) servant à observer un échantillon (4) ayant une région intéressante (23), et un laser (6) générant un rayon laser (7), et au moins un système optique (13) qui couple le rayon laser (7) et l'objectif (9), **caractérisé en ce que**
a) une unité de contrôle de lignes de coupe (2 ; 31) est associée au microscope (1) pour produire un mouvement relatif entre le rayon laser (7) et l'échantillon (4),
b) des moyens permettant de réaliser une perforation (16, 17, 18 ; 16, 17, 18, 31, 32) avec des languettes (26, 27, 28) suivant une ligne de coupe entourant la région intéressante (23) de l'échantillon, interrompue par des languettes (26, 27, 28), au moyen d'un rayon laser (7), la perforation présentant au moins deux languettes (26, 27, 28) réunissant la région intéressante (23) de l'échantillon avec l'échantillon (4) environnant,
c) et **en ce que** des moyens pour arracher les languettes de la perforation sont prévus, avec lesquels la région intéressante (23) de l'échantillon est séparée de l'échantillon (4) avec une seule impulsion laser dirigée sur la région intéressante (23) de l'échantillon.

5. Dispositif selon la revendication 4, **caractérisé en ce que** le rayon laser (7) est fixe et **en ce que** l'unité de contrôle de lignes de coupe présente une platine xy mobile (2) qui déplace l'échantillon (4) par rapport au rayon laser fixe (7) lors d'une perforation.

6. Dispositif selon la revendication 4, **caractérisé en ce que** l'unité de contrôle de lignes de coupe présente un dispositif à balayage laser (31) qui déplace le rayon laser (7) par rapport à un échantillon fixe (4) lors d'une perforation.

7. Dispositif selon la revendication 4, **caractérisé en ce que** les moyens de perforation comprennent une unité de contrôle du laser qui contrôle les paramètres opératoires du laser (6).

8. Dispositif selon la revendication 4, **caractérisé en ce que** les moyens de perforation comprennent un dispositif autofocus pour le laser (6).

9. Dispositif selon la revendication 4, **caractérisé en ce que** les moyens pour arracher les languettes (26, 27, 28) de la perforation comprennent une unité de contrôle de la perforation qui pilote l'unité de contrôle de lignes de coupe (2 ; 31) et l'unité de contrôle du laser.

10. Dispositif selon la revendication 4, **caractérisé en ce que** l'unité de contrôle de la perforation comprend des moyens pour défocaliser le laser (6).
